# EUROPEAN PATENT SPECIFICATION

(11) **EP 1 349 350 B1**
(45) Date of publication and mention of the grant of the patent: **15.03.2006**
(21) Application number: 02425200.9
(22) Date of filing: 29.03.2002
(51) Int. Cl.: H04M 1/02

(54) **Mobile telephone housing with interchangeable bezel**
Gehäuse für ein Mobiltelefon mit austauschbarem Frontring
Boîtier pour les téléphone mobile avec lunette interchangeable

(43) Date of publication of application: 01.10.2003
(73) Proprietor: MOTOROLA, INC., Schaumburg, IL 60196 (US)
(72) Inventor: Moneta, Fabio, 31046 Oderzo (TV) (IT)
(74) Representative: Cross, Rupert Edward Blount

(56) References cited:
- WO-A-01/05209
- GB-A- 2 351 201
- US-A- 3 583 151
- US-A- 5 745 566

## Description

The present inventions relate generally to an interchangeable housing portion, and more particularly to a release mechanism of an interchangeable housing portion.

### BACKGROUND OF THE INVENTIONS

Portable electronic devices, particularly wireless communication devices, may incorporate features or portions of the device that are interchangeable for both functionality and to allow the user to personalize the aesthetics of the device.

User replaceable features of a device allow the user to change functionality or the look and feel of the device to match their needs or style. However, to ensure the integrity of the device, and maintain a robust design, the interchangeable parts or portions must form together and not fall apart on the user. This on the other hand makes it difficult if not impossible for the user to interchange the interchangeable portion without the aid of tools or even having to take the device to the vendor to exchange the interchangeable portion. This is undesirable for the user and the supplier as it makes the device and interchangeable portions less desirable and as a result less profitable.

Accordingly, a system is needed to improve the replacement of interchangeable parts on portable devices such as wireless communication devices. Providing a means to easily interchange portions of the device while maintain the integrity and robustness of the device is needed.

UK patent application no. GB-A-2351201 discloses a communication device with two rotatable housings, with each housing containing circuitry for operating the communication device in different modes. The device includes a latch for rotating one housing with respect to the other. The switch between different operating modes depends on the relative position of the two housings.

Accordingly, a system is needed to improve the replacement of interchangeable parts on portable devices such as wireless communication devices. Providing a means to easily interchange portions of the device while maintain the integrity and robustness of the device is needed

The various aspects, features and advantages of the present invention will become more fully apparent to those having ordinary skill in the art upon careful consideration of the following Detailed Description of the Invention with the accompanying drawings described below.

### BRIEF DESCRIPTION OF THE DRAWINGS

FIG. 1 is an exemplary view of the closed position of the invention;
FIG. 2 is an exemplary view of the open position of the invention;
FIG. 3 is an exemplary exploded view of the invention;
FIG. 4 is an exemplary cross section of the unlocked position of the invention; and
FIG. 5 is an exemplary cross section of the locked position of the invention.

### DETAILED DESCRIPTION OF THE INVENTION

The present invention is a wireless communication device including first and second housing and a removable bezel. The first housing includes a housing support capable of retaining a display. The second housing includes a circular portion positioned about a portion of the housing support, namely the support rim, and an extending portion extending away from the circular portion. The second housing, particularly the circular portion, is capable of rotating around the portion of the support rim of the housing support. The first and second housings have a closed position and one or more opened positions. In the closed position, the circular and extending portions of the second housing are adjacent to the first housing. In one or more opened positions, the circular portion is adjacent to the first housing and at least a portion of the extending portion is positioned away from the first housing.

The circular portion of the first housing comprises an interchangeable or removable bezel. The removable bezel may either be functional or aesthetic or both. To remove the bezel it must be rotated to disengage the bezel from the latching mechanism of the housing portion. The bezel comprises a first engagement portion and the first housing portion comprises a second engagement portion. To disengage the removable bezel the first engagement portion is coupled to the second engagement portion. Then the first housing is rotated with respect to the second housing portion and the bezel is disengaged from the first housing portion.

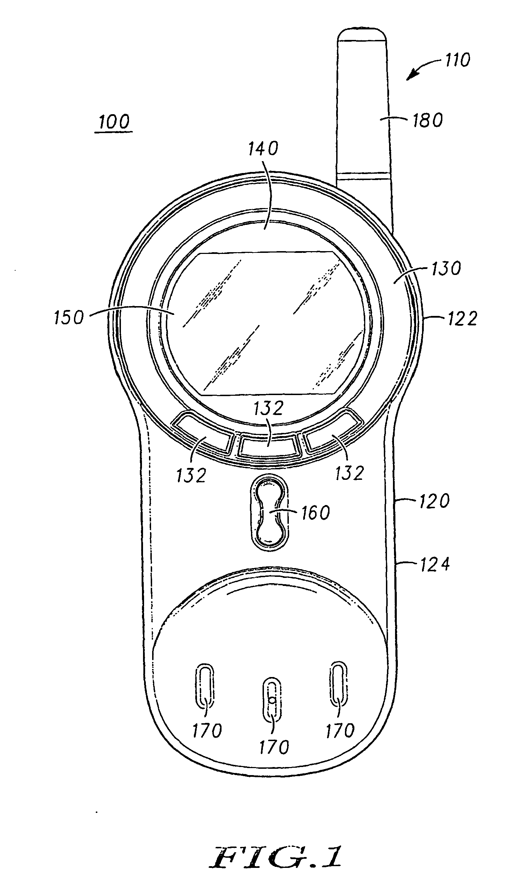

Referring to FIG. 1, there is provided a collapsible radiotelephone 100 in a closed position 110. The radiotelephone 100 has wireless communication capabilities and, thus, may be used to communicate with wireless infrastructure, such as cellular base stations, regional and local wireless transponders, and wireless local area networks. The radiotelephone 100 described herein is a representation of the type of wireless communication device that may benefit from the present invention. However, it is to be understood that the present invention may be applied to any type of portable electronic device and is not limited to the following devices: radiotelephones, cordless phones, paging devices, personal digital assistants, portable computers, pen-based or keyboard-based handheld devices, remote control units, an audio player (such as an MP3 player) and the like. Accordingly, any reference herein to the radiotelephone 100 should also be considered to apply equally to other portable electronic devices.

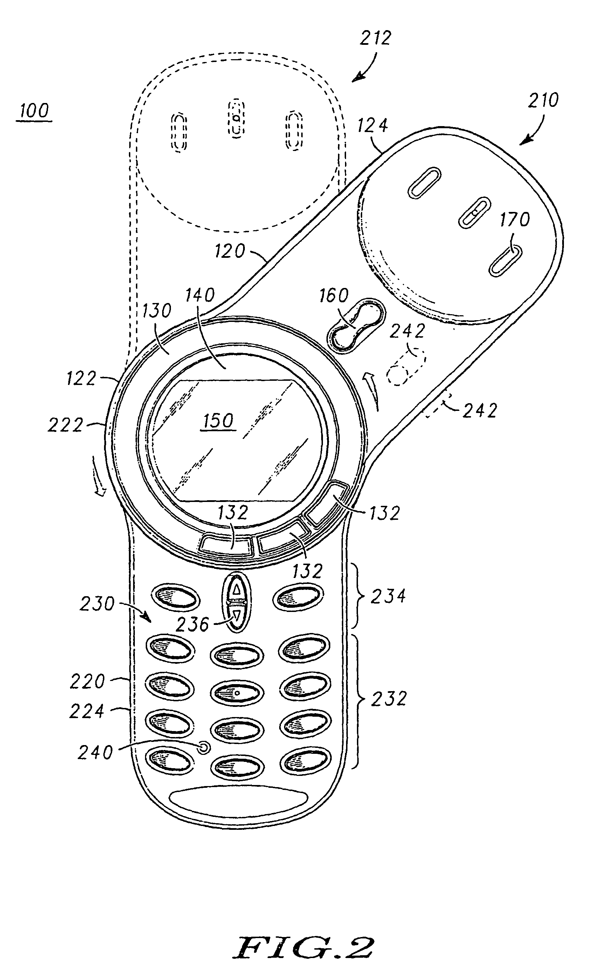

For the preferred embodiment shown in FIG. 1, the radiotelephone 100 housing includes an upper housing 120 having a generally elongated and planar shape. The upper housing 120 has an upper circular portion 122 at one end and an upper extending portion 124 extending away from the upper circular portion. For this closed position 110, the upper circular portion 122 and the upper extending portion 124 are adjacent to a lower housing (shown in FIG. 2). An external antenna 180 or internal antenna (not shown) may be provided to enhance the wireless communication capabilities of the radiotelephone 100.

Components of the radiotelephone 100 are positioned near the upper circular portion 122 including a removable or an interchangeable housing portion 130, a locking piece 140, and a display 150. The interchangeable housing portion is generally referred to as a bezel 130. The bezel 130 has a ring-like shape that may be attached to, and detached from, the radiotelephone 100. The bezel 130 may be attached and detached to select among alternative bezels 130 of different colors to decorate the radiotelephone 100 for example. In addition, the bezel 130 may include housing portion selection buttons 132 and/or indicator lights (not shown) to provide additional functionality to the radiotelephone 100. For example, the preferred embodiment provides three cover selection keys 132: a left selection key, and right selection key and a menu key therebetween. If another desired function is required, the user could interchange the present bezel 130 with a different bezel 130 having new or different buttons with different indicia.

The display 150 may be any type of output device that provides a convenient display of text and/or graphics to the user. Preferably, the display 150 is a liquid crystal display having a backlighting system to illuminate the display when lighting conditions are insufficient for proper viewing by the user. The locking piece 140 locks certain components of the radiotelephone 100 together, which is explained below. The locking piece 140 also functions as a display lens to protect the display 150 from undesirable, foreign matter. The bezel 130 may interact with the display or the bezel may be interchanged to match multiple colors of the display for example.

The extended portion 124 of the upper housing 120 may include upper housing selection buttons 160 and speaker apertures 170. Although many different selection buttons may be provided on the upper housing 120, only one upper housing selection button 160 is shown in FIG. 1 by way of example. Thus, the upper housing 120 of the present invention may include one or more selection buttons (such as selection buttons 132 and 160) for various types of features including, but not limited to, volume control, menu control, call answering, call termination, caller identification, phone book control, voicemail control, e-mail/messaging control, network browsing, power on/off, and the like.

Referring to FIG. 2, the preferred embodiment of the radiotelephone 100 is shown in a first or partially open position 210 and to a second or fully open position 212. The portions of the radiotelephone 100 that become visible in both open positions 210, 212 include a lower or second housing 220, a keypad 230, a sliding button 242, and a microphone aperture 240. When viewed from above, the lower housing of the preferred embodiment has a substantialty similar profile to the upper housing 120. Similar to the upper housing 120, the second housing includes a lower circular portion 222 and a lower extending portion 224. For this opened position 210, the upper circular portion 122 of the upper or first housing 120 is adjacent to, and positioned above, the lower circular portion of the lower housing 220. On the other hand, the upper extending portion 124 is positioned away from the lower housing. For example, as shown in FIG. 2, the upper extending portion 124 is positioned the opposite the lower extending portion 124 on opposite sides of the upper and lower circular portions 122 & 222. The keypad 230 may include any layout of keys that provide convenient operation of the radiotelephone 100 by the user.

The sliding button 242 also becomes visible in FIG. 2 as the housing is rotated to the open positions 210, 212 and more particularly the first open position 210. At this point in the rotation from closed position 102 to the open position 210, the sliding button 242 becomes accessible to the user. The sliding button 242 can then be slid to engage the bezel 130 by a portion of the sliding button 242 (show later) and this effectively couples the bezel to the upper housing 220. While holding the sliding button in the engaged position, the upper housing may be rotated relative to the lower housing, and the bezel also rotates relative to the lower housing. As the bezel 130 rotates, a bezel latch disengages from a lower housing latch. Once disengaged, the bezel 130 may be removed and the sliding button 242 is released.

The position of the upper housing 120 is not restricted the opened position 212 and the closed position 110 described above. The upper extending portion 124 of the upper housing 120 has at least three functional positions about a housing support or bottom support (described below) of the lower housing 220. The preferred embodiment shown in FIG. 2 includes four functional positions, namely opened position 210, closed position 110, and auxiliary positions 210, 260 & 270. Generally, the opened position 212 and the closed position 110 may activate functions of the radiotelephone 100 such as answering an incoming call and terminating an existing call. Each of the auxiliary positions 210, 260 & 270 may also be set to activate a particular function of the radiotelephone 100 or bezel 130. For example, auxiliary position 260 may operate to illuminate the display 150 and bezel 130 (without answering an incoming call, if one exists), and auxiliary position 270 may operate to provide different illumination to the bezel 130.

Another function that may be activated by the functional positions of the upper extending portion 124 includes changing between different modes of operation for a multimode device. For example, the position of the upper extending portion 124 may determine whether the wireless communication device operates as a radiotelephone, a pager, a network browser, an e-mail device, a personal digital assistant, or an audio player. As the modes are changes the one type of bezel 130 may indicate visually that the mode has changed.

Still another function that may be activated by the functional positions of the upper extending portion 124 includes scrolling through a predetermined selection of data shown on the display 150. For example, the upper extending portion 124 may be rotated to conveniently move up and down a list of contacts and/or phone numbers, or a listing of alphanumeric characters (i.e. "A" through "Z", "a" through "z", "0" through "9", and any special characters). This feature may also be used to operate functions that are not necessarily shown on the display 150, such as volume control.

Regardless of the position of the upper housing 120 relative to the lower housing 220, the cover selection buttons 132, upper housing selection button 160, and lower housing selection buttons 234 may operate independently or in cooperation. For example, the each of these selection buttons 132, 160 & 234 may activate a different function of the radiotelephone 100. Regarding the upper housing selection button 160, its function may change depending upon the position of the upper housing 120 relative to the lower housing 220. For the preferred embodiment, the upper housing selection button 160 and the middle button 236 of the lower housing selection buttons 234 operate cooperatively. In the closed position 110 shown in FIG. 1, the upper housing selection button 160 is a mechanical lever that physically contacts the surface of the middle button 236 when a user adjusts the upper housing selection button. In the opened position 210 (and the alternative positions 260 & 270), the upper housing selection button 160 does not have any function.

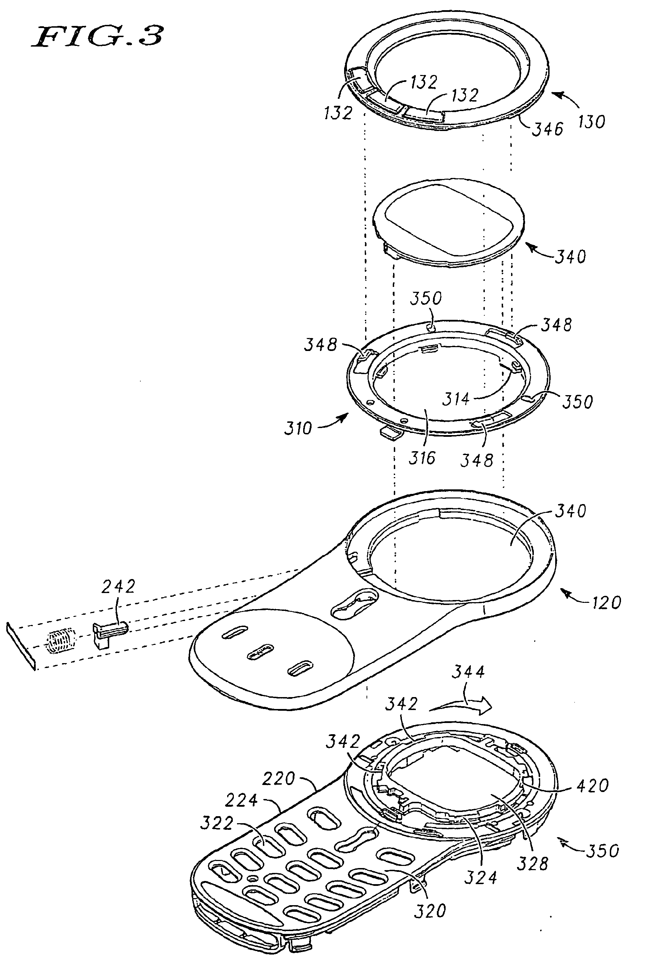

Referring to FIG. 3, the radiotelephone 100 of the preferred embodiment includes a top support 310 in addition to the lower housing 220, the upper housing 120, the locking piece 140 and the bezel 130 described above in reference to FIGS. 1 and 2. In contrast to FIGS. 1 & 2, certain sections of the radiotelephone 100, such as an inner surface of the upper housing 120, an outer surface of the lower housing 220, the display 150 and other components within the upper and lower housings, are not shown in FIG. 3 to more easily view the relationship among the top support 310, the lower housing, the upper housing, the locking piece 140 and the bezel 130. The lower housing 220 includes the lower circular portion 222 and the lower extending portion 224 (shown in FIG. 2). The lower circular portion 222 includes the housing support or bottom support 250 and the display 150 (shown in FIGS. 1 & 2).

The bottom support 250 includes a bottom support rim 324 having a circular shape and a bottom support base 326 to receive and support the display 150 (shown in FIGS. 1 & 2) such as a backlit liquid crystal display. The bottom support rim 324 defines a bottom support opening 328 to provide a viewing area of the display 150 to the user. The housing support or bottom support 250 may be an integrated component that is part of the lower housing 220 or a separable component that is positioned within the lower housing. As shown in FIG. 3, the bottom support 250 of the preferred embodiment is an integrated component that is part of an inside wall 320 of the lower housing 220. The bottom support 250 is integrated with one part of the lower housing 220 to retain the display 150 in that area of the lower housing. The other part of the lower housing 220 includes keypad apertures 322 to reveal user-accessible portions of the keypad 230.

The top support 310 mates with the bottom support 250 and maintains the upper housing 120 between the top and bottom supports. The top and bottom supports 310 & 250 are made of a rigid material, preferably a metallic material, to form a strong, inflexible coupling between the top and bottom supports. The top support 310 includes a top support base 312 and a top support rim 314 having a circular shape. The top support 310 is positioned over the upper housing 120 so that a lower surface of the top support base 312 is adjacent to an upper surface of the upper circular portion 122. Similarly, the bottom support 250 is positioned under the upper housing 120 so that an upper surface of the bottom support base 326 is adjacent to a lower surface of the upper circular portion 122. Also, the top support rim 314 is positioned around the bottom support rim 324 so that an inner surface of the top support rim is adjacent to an outer surface of the bottom support rim. The upper housing 120 is situated between the top support 310 and the bottom support 250 so that the inner surface of the upper circular portion 122 is adjacent to the outer surface of the top support rim 314. Accordingly, the upper circular portion 122 is capable of rotating about the top support rim 314 and the bottom support rim 324.

The top support rim 314 of the top support 310 defines a top support opening 316 to permit the user to see a viewing area of the display 150. The shape of the top support 310 may vary, but the top support rim 314 is preferably circular to provide a rotatable surface for the upper housing 120. Also, the top support opening 316 of the top support 310 preferably has a shape that does not obstruct the user's view of the display 150. Similarly, the upper housing 120 includes an upper housing opening 340 to permit the user to see a viewing area of the display 150 and, preferably, does not obstruct the user's view of the display.

As shown in FIG. 3, the locking piece 140 is positioned through the top support 310 and coupled to the bottom support 250 to prevent the top support from detaching from the bottom support. Of course, as stated above, the locking piece 140 of the preferred embodiment also serves as the display lens to protect the display 150 from undesirable, foreign matter

The upper housing 120 may also include a detent assembly 330 to position the upper housing at various positions about the top and bottom supports 310 & 250. More specifically, the detent assembly 330 permits the upper extending portion 124 of the upper housing 120 to be positioned at various positions about the top support rim 314 and the bottom support rim 324. For the preferred embodiment, the detent assembly 330 includes a spring 332 and a follower 334 that are supported by the upper circular portion 122. The follower 334 is positioned in an aperture 336 through a sidewall of the upper circular portion 122 so that it protrudes passed the inner surface of the upper circular portion. The spring 332 flexibly supports the follower 334 at this position, so that the follower may mate with a slot 318 provided on the outer surface of the top support rim 314. In the alternative, the detent assembly 330 may include a one-piece spring having a projecting form that provides the functions of the spring 332 and the follower 334 of the preferred embodiment.

As shown in FIG. 3, the top support 310 may have a plurality of slots 318 and, likewise, the upper housing 120 may have a plurality of detent assemblies 330. This structure permits the radiotelephone 100, particularly, the upper extending portion 124 of the upper housing 120, to have at least three positions about the bottom support rim 324 of the lower housing 220, as explained above in reference to FIG. 2.

The upper housing portion 120 also comprises an engagement member 404. The engagement member 404 engages a bezel engagement portion 406of the bezel 130 as described in FIG. 5 and FIG. 6. The engagement member may be slid into the bezel engagement member 406 by a sliding button 242 or by depressing the upper housing 120 at a given location, when the upper housing is rotated to a certain position relative to the lower housing, and then rotating the upper housing relative to the lower housing to disengage the bezel 130.

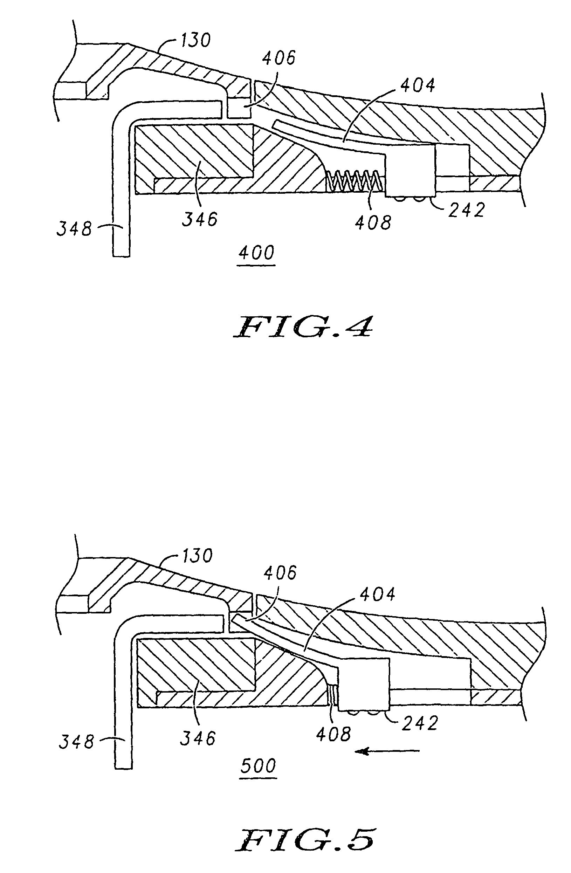

Referring to FIG. 4, the interlocking connection among the locking piece 140, the top support 310, and the bottom support 250 are represented. To assemble these components, the top support 310 is dropped onto the bottom support 250. The top support 310 includes one or more top support inner and outer anchors 310 and the bottom support 250 includes corresponding bottom support inner and outer grooves 342. Top support inner anchors 310 of the top support 310 are aligned with corresponding bottom support inner grooves 342 of the bottom support 250 and, similarly, top support outer anchors 342 of the top support are aligned with corresponding bottom support outer grooves 342 of the bottom support. Then, the top support 310 is rotated, as shown by direction 344, to lock the top support inner and outer anchors 310 into the bottom support inner & outer grooves 342. Finally, the locking piece 140 is dropped down to prevent the top support 310 from rotating back in a direction opposite the original direction 344.

Referring again to FIG. 1 in conjunction with FIG. 4, the interchangeable cover 130 may be attached to, and detached from, the radiotelephone 100 by a user without the need for tools. The interchangeable cover 130 would have a ring-like shape that may enhance but, preferably, does not obstruct the user's view of the display 150. The interchangeable cover 130 includes cover anchors 346 that mate with corresponding top support grooves 348 of the top support 310. The top support 310 also includes projections 350 to provide tension against the inner surface of the interchangeable cover 130 in order to retain the bezel or cover anchors 346 in the top support grooves 348.

Referring to FIG. 4, the cross section shows the bezel 130 and the slide button 242. The slide button 242 has a sliding button engagement member 404 coupled to and extending from the sliding button 242. The engaging member 404 engages an engagement portion 406 of the bezel 130. When the device is in the first open position 212 the sliding button engagement member 404 is aligned to engage the bezel engagement portion 406.

Referring to FIG. 5, illustrates the slide button engagement member 404 engaged with the bezel engagement portion 406. The spring 408 is compressed at this point, until the sliding button 242 is released. The sliding button 242 and hence the sliding button engagement member 404 remains engaged as long as the user holds the sliding button 242 in the position and as the upper portion 120 is rotated toward the second open position 212. This forces the bezel 130 to rotate and unlatch from the lower housing portion 220. This occurs as the bezel or cover anchors 346 disengages from top support grooves 348. The bezel 130 is unlatched and removed. Now the bezel 130 can be replaced with another bezel. The new bezel is aligned with the sliding button engagement portion 404, and possibly aided by some India on the upper housing and the bezel to pre-align the bezel to the upper housing portion to ensure the bezel engagement portion 406 is aligned with the sliding button engagement button 404.

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope of the inventions, which are to be limited not by the exemplary embodiments but by the appended claims.

## Claims

1. A wireless communication device **characterized by**:
a removable housing portion (130);
a first housing (120) capable of retaining said removable housing portion (130);
a second housing (220) movably coupled to said first housing, the second housing (220) being capable of moving relative to said first housing (120); and
an engagement member (404) coupled to said second housing (220), capable of coupling said removable housing portion (130) to said second housing (220) when said engagement member (404) is in an engaged position, such that when said second housing is moved relative to said first housing, said removable housing portion moves with said second housing portion relative to said first housing portion.

2. The wireless communication device of claim 1, wherein the first housing includes a housing latch (348) and said removable housing portion includes a removable housing portion latch (346) to engage said first housing latch in a locked removable housing portion position.

3. The wireless communication device of claim 2, wherein said removable housing portion latch engages said housing latch in said locked removable housing portion position when said removable housing portion moves in a first direction relative to said first housing and said removable housing portion latch disengages said housing latch in an unlocked removable housing portion position when said removable housing portion moves in a second direction relative to said first housing portion.

4. The wireless communication device of claim 3, wherein said first direction is opposite said second direction.

5. The wireless communication device of claim 3, wherein said removable housing portion in said unlocked removable housing portion position, releases from said first housing.

6. The wireless communication device of claim 1, further **characterized by** a lever (242) coupled to said engagement member (404), said lever accessible from a outer surface of said second housing, said lever slides planarly relative to said second housing portion.

7. The wireless communication device of claim 6, further **characterized by** a spring member (408) coupled between said engagement member and said second housing, said spring member positioning said engagement member in a disengaged position.

8. The wireless communication device of claim 1, wherein said removable housing portion moves with said second housing portion relative to said first housing portion when said engaging member is in said engaged position.

9. The wireless communication device of claim 1, wherein said engaging member engages said removable housing portion when said removable housing portion is deformed from its natural resting position to engage said engagement member.

10. The wireless communication device of claim 9, wherein said removable housing portion is deformed by pressing on a portion of said removable housing portion corresponding to a location of said engagement member.

11. The wireless communication device of claim 1, wherein the removable housing portion comprises a removable bezel and wherein the engagement member is capable of coupling said removable bezel to said second housing when said engagement member is in an engaged position in response to the deformation of said removable bezel from its natural resting position.

12. The wireless communication device of claim 11, wherein said removable bezel is deformed by pressing on a portion of said removable bezel thereby bending said removable bezel at a location corresponding to said engagement member.

13. A method for removing an interchangeable housing portion **characterized by**:
positioning a housing, having a first housing (120), a second housing (220) and an interchangeable housing portion 130 in a closed position;
coupling an engagement member (404) of an interchangeable housing portion (130) with said second housing;
rotating said second housing and said interchangeable housing portion relative to said first housing, thereby disengaging said interchangeable housing portion from said first housing.

## Patentansprüche

1. Drahtlose Kommunikationsvorrichtung, **gekennzeichnet durch**:
einen austauschbaren Gehäuseteil (130);
ein erstes Gehäuse (120), das imstande ist, den austauschbaren Gehäuseteil (130) zu halten;
ein zweites Gehäuse (220), das beweglich mit dem ersten Gehäuse gekoppelt ist, wobei das zweite Gehäuse (220) imstande ist, sich relativ zu dem ersten Gehäuse (120) zu bewegen; und
ein Eingriffselement (404), das mit dem zweiten Gehäuse (220) gekoppelt und imstande ist, den austauschbaren Gehäuseteil (130) an das zweite Gehäuse (220) zu koppeln, wenn sich das Eingriffselement (404) in einer eingerasteten Stellung befindet, so dass sich, wenn das zweite Gehäuse relativ zu dem ersten Gehäuse bewegt wird, der austauschbare Gehäuseteil mit dem zweiten Gehäuseteil relativ zu dem ersten Gehäuseteil bewegt.

2. Drahtlose Kommunikationsvorrichtung gemäß Anspruch 1, wobei das erste Gehäuse einen Gehäuseriegel (348) umfasst und der austauschbare Gehäuseteil einen dem austauschbaren Gehäuseteil zugeordneten Riegel (346) umfasst, um in den Gehäuseriegel des ersten Gehäuses in einer verriegelten Stellung des austauschbaren Gehäuseteils einzugreifen.

3. Drahtlose Kommunikationsvorrichtung gemäß Anspruch 2, wobei der dem austauschbaren Gehäuseteil zugeordnete Riegel in den Gehäuseriegel in der verriegelten Stellung des austauschbaren Gehäuseteils eingreift, wenn sich der austauschbare Gehäuseteil in eine erste Richtung relativ zu dem ersten Gehäuse bewegt, und der dem austauschbaren Gehäuseteil zugeordnete Riegel in den Gehäuseriegel in eine entriegelte Stellung des austauschbaren Gehäuseteils freigibt, wenn sich der austauschbare Gehäuseteil in eine zweite Richtung relativ zu dem ersten Gehäuseteil bewegt.

4. Drahtlose Kommunikationsvorrichtung gemäß Anspruch 3, wobei die erste Richtung der zweiten Richtung entgegengesetzt ist.

5. Drahtlose Kommunikationsvorrichtung gemäß Anspruch 3, wobei sich der austauschbare Gehäuseteil in der entriegelten Stellung des austauschbaren Gehäuseteils von dem ersten Gehäuse löst.

6. Drahtlose Kommunikationsvorrichtung gemäß Anspruch 1, weiterhin **gekennzeichnet durch** einen Hebel (242), der mit dem Eingriffselement (404) gekoppelt ist, wobei der Hebel von einer Außenfläche des zweiten Gehäuses zugänglich ist und der Hebel relativ zu dem zweiten Gehäuseteil planar gleitet.

7. Drahtlose Kommunikationsvorrichtung gemäß Anspruch 6, weiterhin **gekennzeichnet durch** ein Federelement (408), das zwischen dem Eingriffselement und dem zweiten Gehäuse gekoppelt ist, wobei das Federelement das Eingriffselement in eine freigegebene Stellung einstellt.

8. Drahtlose Kommunikationsvorrichtung gemäß Anspruch 1, wobei sich der austauschbare Gehäuseteil mit dem zweiten Gehäuseteil relativ zu dem ersten Gehäuseteil bewegt, wenn sich das Eingriffselement in der eingreifenden Stellung befindet.

9. Drahtlose Kommunikationsvorrichtung gemäß Anspruch 1, wobei das Eingriffselement in den austauschbaren Gehäuseteil eingreift, wenn der austauschbare Gehäuseteil aus seiner natürlichen Ruhestellung deformiert wird, um mit dem Eingriffselement in Eingriff zu gelangen.

10. Drahtlose Kommunikationsvorrichtung gemäß Anspruch 9, wobei der austauschbare Gehäuseteil durch Drücken auf einen Teil des austauschbaren Gehäuseteils entsprechend einer Lage des Eingriffselementes deformiert wird.

11. Drahtlose Kommunikationsvorrichtung gemäß Anspruch 1, wobei der austauschbare Gehäuseteil eine austauschbare Blende umfasst und wobei das Eingriffselement imstande ist, die austauschbare Blende an das zweite Gehäuse zu koppeln, wenn sich das Eingriffselement in Reaktion auf die Deformation der austauschbaren Blende aus ihrer natürlichen Ruhestellung in einer eingreifenden Stellung befindet.

12. Drahtlose Kommunikationsvorrichtung gemäß Anspruch 11, wobei die austauschbare Blende durch Drücken auf einen Teil der austauschbaren Blende deformiert wird, wodurch die austauschbare Blende an einer Stelle umgebogen wird, die dem Eingriffselement entspricht.

13. Verfahren zum Entfernen eines austauschbaren Gehäuseteils, **gekennzeichnet durch**:
Positionieren eines Gehäuses, das über ein erstes Gehäuse (120), ein zweites Gehäuse (220) und einen austauschbaren Gehäuseteil (130) verfügt, in eine geschlossene Stellung;
Koppeln eines Eingriffselementes (404) eines austauschbaren Gehäuseteils (130) mit dem zweiten Gehäuse;
Drehen des zweiten Gehäuses und des austauschbaren Gehäuseteils relativ zu dem ersten Gehäuse, wodurch der austauschbare Gehäuseteil von dem ersten Gehäuse freigegeben wird.

## Revendications

1. Dispositif de communication sans fil **caractérisé par** :
une partie de boîtier amovible (130);
un premier boîtier (120) capable de retenir ladite partie de boîtier amovible (130);
un deuxième boîtier (220) relié de façon mobile audit premier boîtier, le deuxième boîtier (220) étant capable de se déplacer par rapport audit premier boîtier (120); et
un élément d'engagement (404) relié audit deuxième boîtier (220), capable de relier ladite partie de boîtier amovible (130) audit deuxième boîtier (220) lorsque ledit élément d'engagement (404) est dans une position engagée, de telle sorte que, lorsque ledit deuxième boîtier est déplacé par rapport audit premier boîtier, ladite partie de boîtier amovible se déplace avec ladite deuxième partie de boîtier par rapport à ladite première partie de boîtier.

2. Dispositif de communication sans fil selon la revendication 1, dans lequel le premier boîtier comprend un verrou de boîtier (348) et ladite partie de boîtier amovible comprend un verrou de partie de boîtier amovible (346) afin d'engager ledit premier verrou de boîtier dans une position de partie de boîtier amovible bloquée.

3. Dispositif de communication sans fil selon la revendication 2, dans lequel ledit verrou de partie de boîtier amovible engage ledit verrou de boîtier dans ladite position de partie de boîtier amovible bloquée lorsque ladite partie de boîtier amovible se déplace dans une première direction par rapport audit premier boîtier et ledit verrou de partie de boîtier amovible se désengage dudit verrou de boîtier dans une position de partie de boîtier amovible débloquée lorsque ladite partie de boîtier amovible se déplace dans une deuxième direction par rapport à ladite première partie de boîtier.

4. Dispositif de communication sans fil selon la revendication 3, dans lequel ladite première direction est opposée à ladite deuxième direction.

5. Dispositif de communication sans fil selon la revendication 3, dans lequel ladite partie de boîtier amovible dans ladite position de partie de boîtier amovible débloquée se dégage dudit premier boîtier.

6. Dispositif de communication sans fil selon la revendication 1, **caractérisé en outre par** un levier (242) relié audit élément d'engagement (404), ledit levier étant accessible depuis une surface extérieure dudit deuxième boîtier, ledit levier coulissant de manière plane par rapport à ladite deuxième partie de boîtier.

7. Dispositif de communication sans fil selon la revendication 6, **caractérisé en outre par** un élément de ressort (408) relié entre ledit élément d'engagement et ledit deuxième boîtier, ledit élément de ressort positionnant ledit élément d'engagement dans une position désengagée.

8. Dispositif de communication sans fil selon la revendication 1, dans lequel ladite partie de boîtier amovible se déplace avec ladite deuxième partie de boîtier par rapport à ladite première partie de boîtier lorsque ledit élément d'engagement est dans ladite position engagée.

9. Dispositif de communication sans fil selon la revendication 1, dans lequel ledit élément d'engagement engage ladite partie de boîtier amovible lorsque ladite partie de boîtier amovible est déformée par rapport à sa position de repos naturelle afin d'engager ledit élément d'engagement.

10. Dispositif de communication sans fil selon la revendication 9, dans lequel ladite partie de boîtier amovible est déformée en appuyant sur une partie de ladite partie de boîtier amovible correspondant à un emplacement dudit élément d'engagement.

11. Dispositif de communication sans fil selon la revendication 1, dans lequel ladite partie de boîtier amovible comprend une lunette amovible et dans lequel l'élément d'engagement est capable de relier ladite lunette amovible audit deuxième boîtier lorsque ledit élément d'engagement est dans une position engagée en réponse à la déformation de ladite lunette amovible par rapport à sa position de repos naturelle.

12. Dispositif de communication sans fil selon la revendication 11, dans lequel ladite lunette amovible est déformée en appuyant sur une partie de ladite lunette amovible en fléchissant ainsi ladite lunette amovible dans un emplacement correspondant audit élément d'engagement.

13. Procédé de retrait d'une partie de boîtier interchangeable, **caractérisé par** le fait de :
positionner un boîtier, ayant un premier boîtier (120), un deuxième boîtier (220) et une partie de boîtier interchangeable (130), dans une position fermée;
raccorder un élément d'engagement (404) d'une partie de boîtier interchangeable (130) audit deuxième boîtier;
faire tourner ledit deuxième boîtier et de ladite partie de boîtier interchangeable par rapport audit premier boîtier, en désengageant ainsi ladite partie de boîtier interchangeable dudit premier boîtier.
